# EUROPEAN PATENT APPLICATION

(11) **EP 4 843 740 A1**
(43) Date of publication of application: **25.11.2026**
(21) Application number: 25178661.2
(22) Date of filing: 23.05.2025
(51) Int. Cl.: B29C 43/24, B29C 43/26, B29C 43/46, B29C 43/48, B29C 43/52, B29C 43/22, B29C 43/28, B29L 31/34, H01M 4/00

(54) **SYSTEMS AND METHODS FOR PRODUCING A MATERIAL WEB**

(71) Applicant: Matthews International GmbH, 48691 Vreden (DE)
(72) Inventor: SCHLEGEL, Ronny, 48691 Vreden (DE); BOGENSTAHL, Frank, 48691 Vreden (DE); SPOLTMANN, Marcel, 48691 Vreden (DE)
(74) Representative: Holzwarth-Rochford, Andreas

(57) **Abstract**

A material is processed to form a material web, wherein the processing includes heating the material above ambient temperature. The material web is transferred to a temperature-controlled conveyor, wherein the conveyor is heated to be above ambient temperature at a lamination point where the material web is transferred to the conveyor. The material web is transited away from the lamination point using the conveyor, wherein the material web is cooled as it is transited away from the lamination point while laminated to the conveyor.

A system comprises a multi-roll calender configured to process a material to form a material web, wherein the processing includes heating the material above ambient temperature. The system further comprises a temperature-controlled conveyor positioned adjacent the multi-roll calender, wherein the conveyor receives the material web at a lamination point. A temperature control unit is configured for heating and cooling the conveyor.

## Description

### TECHNICAL FIELD

The current application relates to systems and methods for producing a material web, and more particularly to systems and methods for producing a material web with controlled cooling while providing structural support.

### BACKGROUND

Different kinds of materials may be compressed and shaped into flat, continuous material webs for a variety of applications across various industries. For example, these materials may include metal foils, polymer composites, plastic, graphite, etc. that are compressed into material webs. These material webs serve varied functions. For example, material webs made from graphite may be used in the production of bipolar plates for fuel cells, where it may be desirable for the graphite web to have a uniform structure, including substantially homogenous density, basis weight, or thickness throughout the continuous graphite web. It may be desirable for the graphite web to be uniform because deformations may interfere with performance and subsequent processing that is required to produce a bipolar plate from the graphite web.

### SUMMARY

The current application relates to systems and methods for producing a material web. An example method comprises processing a material to form a material web, wherein processing the material includes heating the material above ambient temperature. The material web is transferred to a temperature-controlled conveyor, wherein the temperature-controlled conveyor is heated such that the temperature-controlled conveyor is above ambient temperature at a lamination point where the material web is transferred to the temperature-controlled conveyor. The material web is transited away from the lamination point using the temperature-controlled conveyor, wherein the material web is cooled as it is transited away from the lamination point while laminated to the temperature-controlled conveyor.

An example system comprises a multi-roll calender configured to process a material to form a material web, wherein the processing includes heating the material above ambient temperature. The system further comprises a temperature-controlled conveyor positioned adjacent the multi-roll calender, wherein the temperature-controlled conveyor receives the material web at a lamination point. The last roller of the multi-roll calendar and the temperature-controlled conveyor may have different friction coefficients to ensure proper transfer of the material web. A temperature control unit is configured for heating and cooling the temperature-controlled conveyor.

### DESCRIPTION OF DRAWINGS

Figure 1 is an example block diagram illustrating a system for producing a material web.
Figure 2 illustrates an example embodiment of a web production module, implemented as a multi-roll calender system for compressing a material into a continuous material web.
Figure 3A illustrates an example embodiment of a temperature control and support module, implemented as a temperature-controlled conveyor.
Figure 3B illustrates an example embodiment integrating a web production module with a temperature control and support module.
Figure 3C illustrates another embodiment of the temperature control and support module, implemented using two conveyors.
Figure 4 is an exemplary embodiment of a system for producing a material web that utilizes a multi-roll calender for compressing a material into a continuous material web.
Figure 5 is an example system for producing a material web that utilizes an additional conveyor positioned above the temperature-controlled conveyor of Figure 4 to provide further structural support and compression to the material web during cooling.
Figure 6 depicts an example system for producing a material web that utilizes a non-continuous carrier as the temperature-controlled conveyor of Figure 4.
Figure 7 illustrates an exemplary process flow diagram for producing a material web with controlled cooling while providing structural support.

### DETAILED DESCRIPTION

To form a continuous material web, a material may be passed through a processing system, such as a calender or an extruder. As the material web exits the processing system, it may be at a higher than ambient temperature because of heat retained during the processing. A potential challenge at this stage is managing the cooling process of the freshly formed material web. If the material web is allowed to cool in the open air without structural support or temperature control, it may experience unwanted deformations such as warping, wrinkling, curling, or fracturing. Such deformations can compromise the material web's integrity, making it unsuitable for further processing, where subsequent smoothing of the material web may not be possible. Accordingly, in embodiments, there is a need for improved systems and methods for producing a material web that enable controlled, uniform cooling of the material web, while providing structural support during the cooling phase to prevent any unwanted deformations.

Certain example systems and methods herein relate to processes for producing a material web. In particular, certain systems and methods described herein address challenges associated with allowing a freshly compressed material web to cool in an uncontrolled and unsupported manner. Example systems herein may provide structural support as well as temperature control during the cooling process of the material web. The systems may be adapted for use with various types of materials, including those that are prone to deformation when cooling.

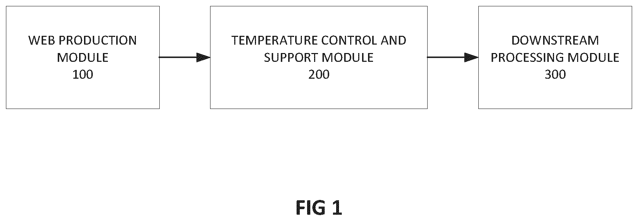

Figure 1 is a schematic block diagram illustrating an example system for producing a material web. The system comprises: a web production module 100, a temperature control and support module 200, and a downstream processing module 300. The web production module 100 is configured to receive a raw material, such as graphite or a polymer composite in a powder, slurry, or other form, and process it into a continuous material web using one or more of heat, pressure, shear, or other means. In embodiments, various systems may be utilized to implement the web production module 100, such as a multi-roll calender or an extruder. In certain examples, the resulting material web from the web production module 100 may be at an elevated temperature, which may be above ambient temperature, making the material web susceptible to deformation from uneven cooling.

A temperature control and support module 200 may be positioned downstream of the web production module 100 (e.g. immediately after) and configured to receive the freshly formed material web while it is still at an elevated temperature. The temperature control and support module 200 may be configured to provide both structural support and thermal regulation to ensure that the material web cools down gradually and uniformly, thus reducing the risk of deformation from uneven cooling. The temperature control and support module 200 may help preserve the physical integrity of the material web by maintaining a controlled cooling environment and physically supporting the material web to prevent sagging or other physical distortion. In embodiments, the temperature control and support module 200 may be implemented as a temperature-controlled conveyor, such as a belt or sheet of moving material.

A downstream processing module 300 may be configured to perform additional processing on the cooled material web. In embodiments, the downstream processing module 300 may perform cutting, embossing, storing, or other types of processing as needed for the intended use of the material web. In embodiments, the downstream processing module 300 may be positioned immediately downstream of the temperature control and support module 200. In other embodiments, the downstream processing module 300 may operate as a separate, standalone unit. In such an example, the material web output from module 200 may be wound onto a roll for transport or storage, and later unwound for processing by the downstream processing module 300.

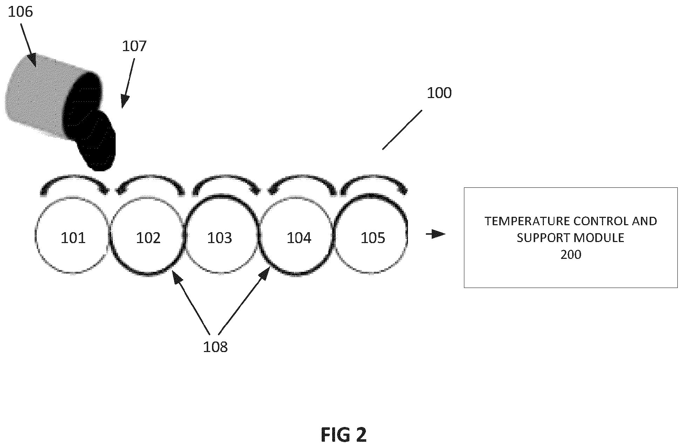

Figure 2 illustrates an exemplary embodiment of the web production module 100, implemented as a multi-roll calender system 100 that is configured to compress a material into a material web by applying pressure. In this embodiment, a feeder element 106 (e.g., a hopper that provides a graphite powder mixture to a first nip between rollers 101 and 102) delivers a material 107 into the multi-roll calender 100, which processes the material 107 into a continuous material web 108. This embodiment includes a series of five rollers, 101 to 105. Each adjacent pair of rollers forms a nip through which the material passes, undergoing progressive mechanical compression at each nip. More specifically, the feeder element 106 provides the material 107 into the nip between rollers 101 and 102, which compress the material 107 into an initial web that adheres to the bottom of roller 102. The initial web is further compressed at a second nip between rollers 102 and 103, adhering to the top of roller 103. The web is further compressed at the nip between rollers 103 and 104, adhering to the bottom of roller 104 before being compressed further between rollers 104 and 105, adhering to the top of roller 105. The compressed web may be peeled from the top of roller 105 or otherwise removed for subsequent processing, such as by laminating that web from roller 105 onto another conveying structure. The number of rollers 101-105, the pressures exerted at the nips between the rollers, the roller speeds, and other characteristics of the multi-roll calender system 100 may be augmented as appropriate for the desired use case (e.g., to make a material web that has the desired width and thickness at a desired rate while subjecting the material 107 to an appropriate level of shear (e.g., enough shear to convert the material 107 into the desired material web 108 but not too much shear that could damage (e.g., tear) the material web 108)). In embodiments, the multi-roll calender 100 uses an even number of rollers (e.g., rollers 101-104) and an odd number of nips therebetween such that the material web 108 is transiting the final roller 104 in an upward direction before further processing by the temperature control and support module 200.

In an embodiment, each roller in the series is configured to rotate in an opposite direction as its immediate neighbor, as shown by the arrows in Figure 2. This configuration advances the material 107 forward through the calender path, while subjecting the material 107 to controlled mechanical pressure at each nip. As the material travels through the sequence of rollers, it undergoes progressive mechanical compression at each nip, thus forming a continuous, material web 108. In embodiments, each roller may turn progressively faster (e.g. 5%, 10%, 20%, or 30% faster than the previous roller). As the material web 108 passes through each nip, it may tend to adhere to the faster turning roller, thus creating a temporary lamination effect, where the material web 108 adheres to each faster moving roller surface as it progresses through the calender path.

As the material 107 is compressed between each pair of rollers, the applied mechanical pressure as well as friction may generate heat. In some embodiments, heat may also be externally applied to the material 107 to aid the web production process (e.g. by heating one or more rolls, via external infrared heat application). As a result, the material web 108 may reach an elevated temperature by the time it exits the final roller 105. This elevated temperature may cause the material web 108 to be pliable and more susceptible to deformation if not supported and cooled in a controlled manner.

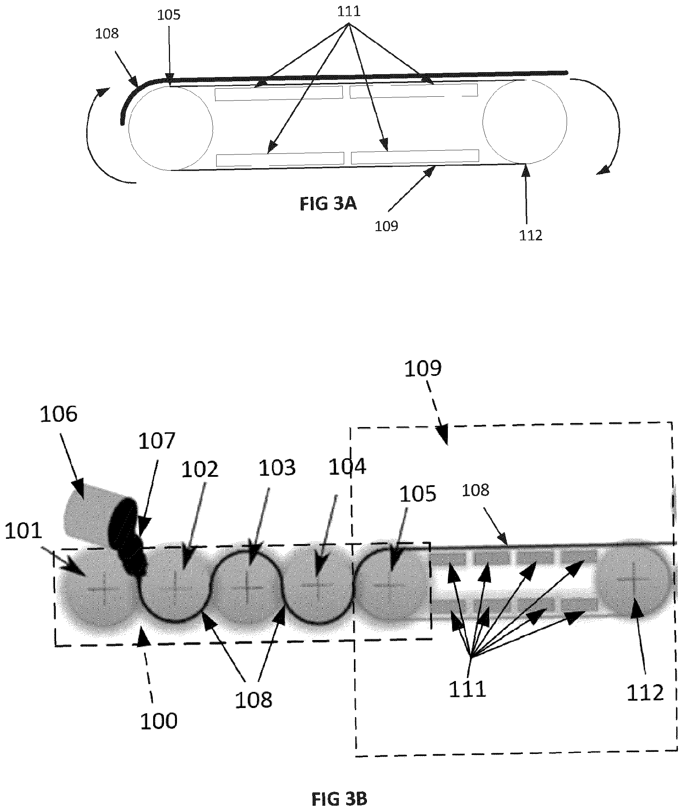

Figure 3A illustrates an exemplary embodiment of a temperature control and support module 200, implemented using a temperature-controlled conveyor belt 109. The temperature-controlled conveyor belt 109 circulates in a continuous loop around two rollers 105 and 112 on either end, and is configured to provide both structural support and temperature control for a material web 108 that may be received and carried by its top surface. In embodiments, the temperature-controlled conveyor belt 109 may be positioned downstream of the web production module 100 (e.g. adjacent to roller 104), allowing the material web 108 to be transferred directly to the top surface of the temperature-controlled conveyor belt 109, such as by lamination from a final roller (e.g., roller 104) of the web production module 100 to the conveyor belt 109.

To maintain temperature control, the temperature-controlled conveyor belt 109 includes four temperature control units 111, two positioned along the underside of the upper surface and two along the lower surface. In embodiments, fewer or more temperature control units 111 may be utilized. Each temperature control unit 111 may be individually controlled and configured to raise or lower its temperature, thereby adjusting the temperature of the temperature-controlled conveyor belt 109 accordingly. In an embodiment, the temperature control units 111 are configured to initially raise the temperature of the temperature-controlled conveyor belt 109 to closely approximate the temperature of an incoming material web at the point where the material web 108 is received onto the conveyor belt 109, and then gradually reduce the temperature of the conveyor belt 109 and the material web 108 thereon in a uniform manner. This configuration allows the material web 108, supported on the temperature-controlled conveyor belt 109, to cool in a controlled manner, limiting the risk of deformation.

In addition to temperature control, the temperature-controlled conveyor belt 109 also provides continuous structural support to the material web 108 by allowing the material web to rest flat against the conveyor belt surface (e.g., while the material web 108 is still hot and pliable). This support can prevent unwanted deformations such as sagging, curling, or warping during the cooling process. The material web 108 may be laminated onto the surface of the temperature-controlled conveyor belt 109, enabling full-surface contact that facilitates both structural support and uniform cooling.

Figure 3B illustrates an example in which a web production module 100 is integrated with a temperature control module 200. The web production module 100 is implemented similarly to the multi-roll calender system 100 of Figure 2 via rollers 101-104 and nips therebetween. The temperature control module 200 is implemented similarly to the temperature-controlled conveyor belt 109 of figure 3A. As the material web 108 exits the final roller 104, the material web 108 is directly transferred onto the top surface of the temperature-controlled conveyor belt 109 via lamination. In embodiments, the temperature-controlled conveyor belt 109 may be driven at a higher speed than roller 104. In embodiments, the final roller 104 and the temperature-controlled conveyor belt 109 may have different friction coefficients to ensure proper transfer of the material web 108 from the web production module 100 to the temperature-controlled conveyor belt 109.

As shown in Figure 3B, the temperature-controlled conveyor belt 109 loops around roller 105, passing through the nip between rollers 104 and 105, such that the material web 108 is pressed against the surface of the conveyor at this nip. In this configuration, the material web 108 is compressed directly onto the surface of the temperature-controlled conveyor belt 109 as it exits the last roller 104. The pressure at the nip, and the faster speed of the temperature-controlled conveyor belt 109, creates a lamination effect, causing the hot material web 108 to adhere to the surface of the temperature-controlled conveyor belt 109. The material web 108 is thus laminated onto the surface of the temperature-controlled conveyor belt 109 with full-surface contact, ensuring that it is structurally supported across its entire area while cooling uniformly as it is carried forward towards roller 112.

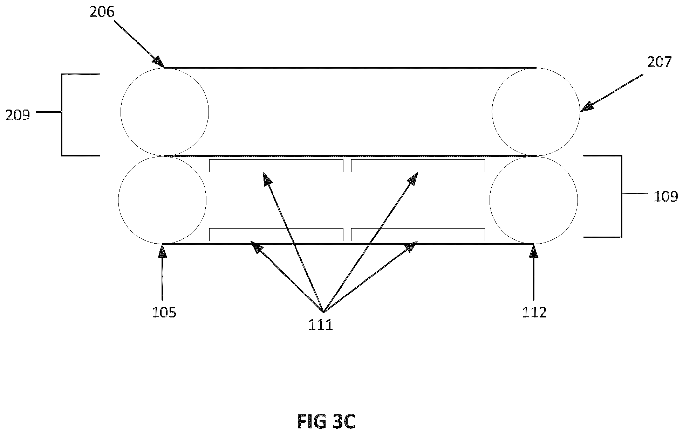

Figure 3C illustrates another exemplary embodiment of the temperature control and support module 200, which includes two conveyors, the temperature controlled conveyor belt 109 and conveyor 209. The conveyor 209 is positioned above the temperature-controlled conveyor belt 109. The conveyor 209 is configured to remain in contact with the top surface (e.g., the entire top surface) of the material web, thereby applying downward pressure on the material web during the cooling phase, which helps maintain flatness of the material web.

In this embodiment, the conveyor 209 circulates in a continuous loop around rollers 206 and 207 on either end as a belt. Rollers 206 and 207 are positioned directly above rollers 105 and 112 respectively. A material web may be received between the two conveyors such that the material web is in direct contract with both conveyors. This dual-conveyor configuration provides surface contact with the material web across its entire top as well as bottom surface, which facilitates enhanced structural support during cooling. This dual support helps maintain the material web's flatness by preventing unwanted deformations such as curling upward or downward, or warping during the cooling phase.

Additionally, because rollers 206 and 105, and rollers 207 and 109 are vertically aligned, they may be configured to apply additional pressure to the material web during the cooling process. This can help further compress the material web during the cooling process, while preventing deformation.

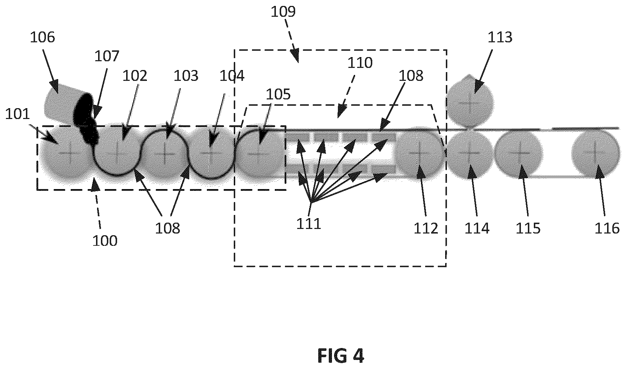

Figure 4 illustrates an exemplary embodiment of a system for producing a material web, that integrates the web production module 100, the temperature control and support module 200, and the downstream processing module 300 into a single, continuous process, allowing the material web to be formed, cooled, and processed in a single sequence. This embodiment utilizes a multi-roll calender 100 that is configured to process a material 107 into a continuous material web 108, along with a temperature-controlled conveyor belt 109 for guiding the material web 108 towards downstream processing while providing structural support and a controlled cooling environment. This configuration ensures that the freshly processed material web 108 undergoes a controlled cooling process while remaining structurally supported in a flat position on the temperature-controlled conveyor belt 109, thereby preventing any unwanted deformations that could occur as a result of uncontrolled cooling such as warping, wrinkling, curling, or fracturing. In other embodiments, means other than a multi-roll calender may be used to process the material into a material web, such as an extruder.

The embodiment of Figure 4 includes a feeder element and/or hopper 106, which is configured to supply the material 107 to the multi-roll calender 100. The multi-roll calender 100 is configured to compress the material 107 that it is supplied with into a continuous material web 108. The multi-roll calender 100 may comprise two or more rollers that are configured to apply one or more of heat, pressure, shear, or other physical condition to the material 107 in order to compress it into a continuous material web 108. The number of rollers may be selected based on the properties of the material and the desired thickness of the material web.

The multi-roll calender 100 in this embodiment comprises a series of five rollers: a first roller 101, a second roller 102, a third roller 103, a fourth roller 104, and a fifth roller 105. As shown in Figure 4, the rollers are positioned in sequential order such that the material 107 and consequently, the material web 108, passes successively through each roller nip, undergoing compression as it progresses through the sequence of rollers.

In this exemplary embodiment, the material 107 is graphite. In other embodiments, other types of materials may be used. In some embodiments, the graphite 107 may be provided in the form of expanded graphite, graphite flakes, or graphite worms. In other embodiments, the graphite 107 may be in the form of a composition that combines graphite with a polymer binder, such as a high-felt polymer composition comprising more than 80% graphite and less than 20% polymer. In other embodiments, other binders may be used in other graphite-to-binder ratios.

The feeder element and/or hopper 106 is configured to supply graphite 107 between the first roller 101 and the second roller 102. As explained above, graphite 107 may be in various forms such as graphite flakes, graphite worms, or a polymer composition. As graphite 107 is supplied to the nip between the first roller 101 and the second roller 102, the rollers rotate towards each other to apply pressure to the graphite 107, which consequently undergoes mechanical compression between the two rollers. The rollers are positioned relative to each other and driven such that the graphite 107 is compacted into a continuous web, graphite web 108. As the graphite web 108 passes through the series of rollers, it undergoes further compression at each nip between consecutive rollers.

In an embodiment, this mechanical compression process as well as friction may generate heat such that graphite web 108 is above an ambient temperature as it undergoes compression. As the graphite web 108 is compacted at each successive nip, the applied pressure may raise the temperature of the graphite web 108 as it reaches roller 105.

In another embodiment, one or more rollers in the multi-roll calender may be heated. The rollers may be equipped with an internal temperature control unit, thus allowing the rollers to apply pressure as well as heat to graphite 107 as it is processed into graphite web 108. The application of heat during processing may assist in softening graphite 107, making it more pliable, and thus, better able to conform into graphite web 108 under pressure. For example, in an embodiment where graphite 107 is in the form of a polymer composition, the applied heat may soften the polymer components in the composition, which makes the polymer composition more responsive to compression, and thus easier to compact into graphite web 108.

In some embodiments, an external temperature control unit may be used to apply heat to graphite 107 and graphite web 108 as they pass through the series of rollers. The external heating may occur before or during compression, via an infrared heater or other heat sources, to soften the graphite and assist in compression.

As a result of the heat generated or applied during compression, the graphite web 108 is at an elevated temperature that is higher than ambient temperature when it reaches roller 105 because it retains the heat. If allowed to cool in the air without any support in an uncontrolled manner, graphite web 108 may suffer structural deformations such as warping, wrinkling, curling, or fracturing because of the sudden temperature change, which compromises the quality and uniformity of the graphite web 108. To address this problem, the embodiment of Figure 4 utilizes a temperature-controlled conveyor belt 109 which provides both structural support and controlled cooling.

The temperature-controlled conveyor belt 109 is positioned immediately downstream of or adjacent to roller 104 and is configured to receive graphite web 108 directly from roller 104. The temperature-controlled conveyor belt 109 is configured to move continuously in a defined loop, transporting the graphite web 108 forward. In this embodiment, the temperature-controlled conveyor belt 109 circulates around rollers 105 and 112 on either end. The temperature-controlled conveyor belt 109 is driven by the rotational movement of those rollers. As rollers 105 and 112 rotate, the temperature-controlled conveyor belt 109 is propelled forward in a continuous loop.

The graphite web 108 is received at a point of contact, lamination point 110, on the temperature-controlled conveyor belt 109, which spans the upper surface of the temperature-controlled conveyor belt 109 as shown in Figure 4. At lamination point 110, the freshly compressed graphite web 108, that is at an elevated temperature, comes into direct contact with the surface of the temperature-controlled conveyor belt 109, effectively laminating the graphite web 108 onto the surface of the temperature-controlled conveyor belt 109.

In some embodiments, the temperature-controlled conveyor belt 109 is implemented as a loop of substrate material that circulates around rollers on either end, as shown in Figure 4. In other embodiments, the conveyor belt is implemented as a span of substrate material that is unwound from a roll, and that may be wound back onto the roll after use.

The conveyor belt may be formed using various types of substrate material depending on various factors, for example, desired thermal conductivity of the conveyor belt, properties of the material 106 used to form the material web 108, desired adhesion and release compatibility between the material web 108 and the conveyor belt, and desired rigidity of the conveyor belt. In this embodiment, the conveyor belt's substrate material is made of stainless steel because of its thermal stability, and because it allows for easy release of the graphite web 108 after cooling. In other embodiments, other substrate materials may be used such as aluminum, chrome plated metal, brass, copper, or polymer.

The temperature-controlled conveyor belt 109 is configured to maintain a controlled temperature along its entire surface so that the graphite web 108, that is laminated onto its surface, also maintains a controlled temperature. In the embodiment shown in Figure 4, this temperature control is implemented using temperature control units 111 that are positioned along the underside of the surface of the temperature-controlled conveyor 109. In embodiments, the temperature control units 111 may be implemented as an inductive heater or an infrared heater. Each temperature control unit 111 may be individually controlled and configured to increase or lower its temperature. The temperature of the temperature-controlled conveyor belt 109 may range from 40° C to 550° C.

As the graphite web 108 is received at the lamination point 110, the graphite web 108 comes into direct contact with the surface of the temperature-controlled conveyor belt 109. The system embodied in Figure 1 is configured such that the graphite web 108 is laminated flat onto the temperature-controlled conveyor belt 109, thus ensuring that the graphite web 108 is structurally supported across its entire length and width by the temperature-controlled conveyor belt 109. This structural support, while the graphite web 108 is freshly compressed and still at an elevated temperature, prevents the graphite web 108 from sagging or curling in an unwanted manner as might otherwise occur if the hot graphite web 108 were allowed to cool in the air without any support. This ensures physical support during the entire cooling phase, which prevents material webs from lifting, curling, or cracking during cooling.

In addition to providing structural support, the temperature-controlled conveyor belt 109 also maintains a controlled temperature across the entire surface of the graphite web 108. Because the entire surface of the graphite web 108 is in direct contact with the temperature-controlled conveyor belt 109, an even temperature is maintained across the entire surface of the graphite web 108, thereby preventing any regions from cooling faster or slower than other regions. Therefore, when the hot graphite web 108 first comes into contact with the temperature-controlled conveyor belt 109, the cooling rate across the entire graphite web 108 is uniform and consistent.

The temperature control units 111 are configured to allow for a gradual rise or decline in temperature in a controlled manner. Initially, as the graphite web 108 exits roller 104, temperature control units 111 are configured to maintain the temperature-controlled conveyor belt 109 at approximately the same temperature as the graphite web 108. This configuration ensures a minimal thermal gradient at the lamination point 110, thus avoiding a sudden drop in temperature that could cause unwanted deformations in the graphite web 108. As the graphite web 108 progresses along the lamination point 110 on the surface of the temperature-controlled conveyor belt 109, the temperature control units 111 may gradually reduce the temperature of the temperature-controlled conveyor belt 109, allowing the graphite web 108 also to cool down gradually and evenly across its entire surface while remaining structurally supported. Because the entire graphite web 108 is fully supported by the temperature-controlled conveyor belt 109, and the graphite web 108 is exposed to the same temperature across its entire surface, the risks associated with uneven or uncontrolled cooling, such as warping, wrinkling, curling, or fracturing, are avoided. This results in a uniform and homogenous graphite web 108.

In the embodiment shown in Figure 4, after the graphite web 108 is uniformly cooled while being supported on the temperature-controlled conveyor belt 109, the graphite web 108 is directly transited downstream for further processing, such as cutting or embossing. As shown in Figure 4, the temperature-controlled conveyor belt 109 loops around roller 112, which is positioned downstream of roller 105 and the temperature-controlled conveyor belt 109 and is configured to redirect the temperature-controlled conveyor belt 109 back towards roller 105, which completes the temperature-controlled conveyor's loop. Roller 112 is configured to separate the graphite web 108 from the temperature-controlled conveyor belt 109. The bending of the temperature-controlled conveyor belt 109 at roller 112 causes the temperature-controlled conveyor belt 109 to be redirected towards roller 105 while the graphite web 108 peels away from the temperature-controlled conveyor belt 109 and continues moving downstream for further processing.

In the embodiment shown in Figure 4, rollers 113 and 114 may be configured for embossing the graphite web 108, and rollers 115 and 116 may be configured for cutting the graphite web 108. In some embodiments, the system may be disconnected from any downstream processing, so the graphite web 108 may be removed from roller 112 for storage or separate processing.

In some embodiments, rollers 101, 102, 103, 104, and 105 of the multi-roll calender 100 may rotate at the same speed. In other embodiments, the rollers may rotate at different speeds such that the rotation speed increases from the first roller in the sequence, first roller 101, to the last roller in the sequence, fifth roller 105. In some embodiments, the friction ratio between rollers 104 and 105 may range from 0.1% to 50%. In some embodiments, the friction ratio between rollers 104 and 105 may range from 0.1% to 5%. In some embodiments, the friction ratio between rollers 104 and 105 may range from 5% to 10%. In some embodiments, the friction ratio between rollers 104 and 105 may range from 10% to 25%. In some embodiments, the friction ratio between rollers 104 and 105 may range from 25% to 50%. In some embodiments, the temperature-controlled conveyor belt 109, which loops around roller 105, is configured to run at the same speed as roller 104. In other embodiments, the temperature-controlled conveyor belt 109 is configured to run at a slightly faster speed than roller 104. The speed of the temperature-controlled conveyor belt 109 may vary depending on how quickly or slowly the material web 108 needs to cool.

In some embodiments, before the temperature-controlled conveyor belt 109 passes through roller 105, the temperature-controlled conveyor belt 109 may be preheated between rollers 104 and 105 so that the temperature of the temperature-controlled conveyor belt 109 closely approximates the temperature of the graphite web 108. In some embodiments, the temperature-controlled conveyor belt 109 is preheated via internal temperature control units present in the rollers. In other embodiments, the temperature-controlled conveyor belt 109 is preheated via an external temperature control unit.

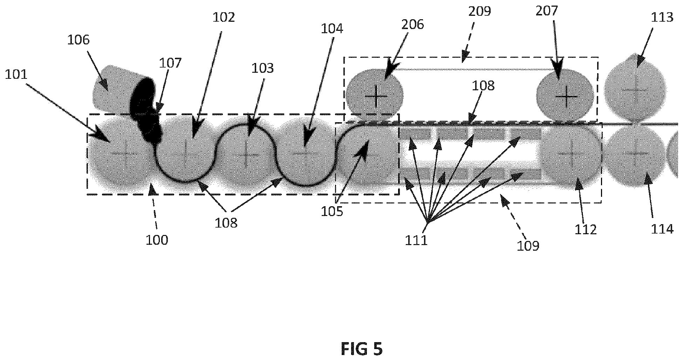

Figure 5 illustrates another embodiment of a system for producing a material web. Similar to the embodiment shown in Figure 4, this embodiment also utilizes a multi-roll calender 100 that is configured to process a material 107 into a continuous material web 108, along with a temperature-controlled conveyor belt 109 for guiding the material web 108 towards downstream processing while providing structural support and a controlled cooling environment. In addition to the temperature-controlled conveyor belt 109, this embodiment also utilizes a second conveyor, conveyor 209, which is positioned above the temperature-controlled conveyor belt 109, and is configured to provide additional structural support and compression during the cooling phase.

In this embodiment, the conveyor 209 is made of stainless steel. In other embodiments, the conveyor 209 may be made of other substrate materials, such as aluminum or polymer. The conveyor 209 may be formed using various types of substrate material depending on various factors, such as, desired thermal conductivity of the conveyor 209, properties of the material 107 used to form the material web 108, desired adhesion and release compatibility between the material web 108 and the conveyor 209, and desired rigidity of the conveyor 209.

As shown in Figure 5, the conveyor 209 loops around two rollers, rollers 206 and 207, that are positioned above the temperature-controlled conveyor belt 109 and downstream the multi-roll calender 100. Rollers 206 and 207 create a defined path for the conveyor 209 to loop around continuously. As rollers 206 and 207 rotate, the conveyor 209 is propelled forward in a continuous loop.

As in the embodiment described with respect to Figure 4, the material web 108 exits roller 104 of the multi-roll calender 100 after compression, and is directly transmitted onto temperature-controlled conveyor belt 109 at lamination point 110. At this point, the material web 108 is still at an elevated temperature, and is laminated flat onto the surface of the temperature-controlled conveyor belt 109 for structural support and controlled cooling. Temperature control units 111 are positioned along the underside of the temperature-controlled conveyor belt 109, as in the embodiment illustrated in Figure 4, to maintain a controlled temperature.

In this embodiment, because the conveyor 209 is positioned above the temperature-controlled conveyor belt 109, the graphite web 108 comes into contact with both conveyors as it progresses along the lamination point 110. The conveyor 209 is configured to move in synchronization with the temperature-controlled conveyor belt 109, and to provide additional structural support to the graphite web 108 as it cools down. By being in contact with both the temperature-controlled conveyor belt 109 and the conveyor 209, the graphite web 108 is fully supported on both top and bottom surfaces, which prevents it from lifting, curling, or otherwise distorting during the cooling phase. The dual support provided in this embodiment effectively holds the graphite web 108 in a flat position throughout the cooling process so that the ultimate graphite web product is uniform and homogenous without any deformation.

In some embodiments, the conveyor 209 may be configured to run at a slightly faster speed than the temperature-controlled conveyor belt 109. Depending on the properties of the material 107 that is being processed into the material web 108, this slight speed difference may create a stretching effect on the material web 108 as desired.

In this embodiment, the conveyor 209 may also be configured to apply additional pressure to the graphite web 108 during the cooling process for further compression. As the graphite web 108 first enters lamination point 110, it is guided between rollers 206 and 105, where it is supported between the two conveyors 109 and 209. At this point, rollers 206 and 105 may be configured to apply some pressure to the graphite web 108 for further compression as it begins to cool down. As the graphite web 108 continues downstream along the lamination point 110, it passes between rollers 207 and 112, which may be configured to apply further pressure to the graphite web 108 for additional compression. This additional compression, which occurs during the cooling phase, may help further compact the graphite web 108 while remaining supported on both the top and bottom surfaces.

In this embodiment, the graphite web 108 is directly transited downstream for further processing. For example, rollers 113 and 114 may be configured for embossing or cutting the graphite web 108. In other embodiments, the graphite web 108 may be removed at roller 112 for storage or separate processing.

In embodiments, the conveyor 209 may also be configured to provide additional temperature control. A plurality of temperature control units 111 may be positioned along the underside of the surface of the conveyor 209. Each temperature control unit 111 may be individually controlled and configured to increase or lower its temperature. As the graphite web 108 is received at the lamination point 110, the graphite web 108 undergoes controlled cooling across both its top and bottom surfaces via contact with conveyors 209 and 109 respectively.

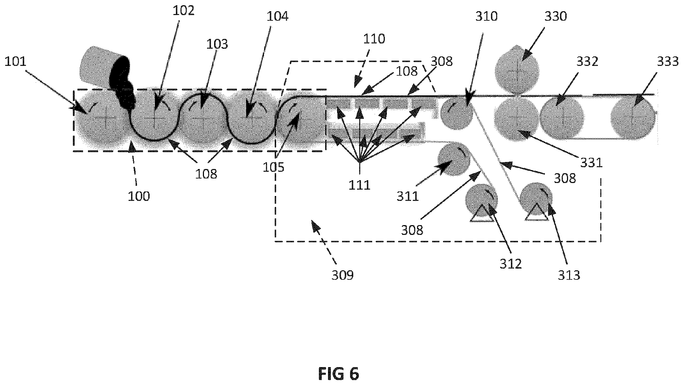

Figure 6 illustrates another embodiment of a system for producing a material web. Similar to the embodiments shown in Figures 4 and 5, this embodiment also utilizes a multi-roll calender 100 that is configured to process a material 107 into a continuous material web 108. This embodiment also utilizes a temperature-controlled conveyor. However, unlike the previous embodiments where the temperature-controlled conveyor 109 is implemented as a belt on a continuous loop, the temperature controlled conveyor 309 of this embodiment is implemented as a non-continuous carrier 308 (e.g., a release film, a metal foil of stainless steel or aluminum, a roll of polymer material) that is unwound from a supply roll 312 and rewound after use onto a reuse roll 313. In embodiments, the carrier 308 may be reusable where it can be reloaded onto supply roll 312 after use. In other embodiments, the carrier 308 may be discarded after one use.

As shown in Figure 6, supply roll 312 is configured to rotate in a counterclockwise direction to supply the carrier 308 into the system as temperature-controlled conveyor 309. The carrier 308 serves as the substrate onto which the freshly compressed material web 108 is laminated as the material web 108 exits roller 104. From the supply roll 312, the non-continuous carrier 308 is routed towards guide roll 311, which also rotates in a counterclockwise direction to guide the non-continuous carrier 308 underneath roller 105. The non-continuous carrier 308 then passes between rollers 104 and 105, where the freshly compressed material web 108 is laminated directly onto the surface of the non-continuous carrier 308. The carrier 308 thus provides structural support to the material web 108. Roller 105, rotating in a clockwise direction, guides the combined carrier 308 and the laminated material web 108 downstream towards roller 310.

In some embodiments, the carrier 308 may be preheated prior to reaching the lamination point 110 so that the temperature of the carrier 308 closely approximates the temperature of the material web 108. The carrier 308 may be heated at the guide roll 311 by using internal temperature control units inside the roll. In another embodiment, the carrier 308 may be heated by using external temperature control units such as an infrared heater or an inductive heater.

As in the other embodiments illustrated above, the temperature control units 111 are positioned along the underside of the temperature-controlled conveyor 309. These temperature control units 111 are configured to maintain the carrier 308 at a controlled temperature, particularly at the lamination point 110 between rollers 105 and 310. In some embodiments, the temperature control units 111 may initially maintain the carrier 308 at approximately the same temperature as the freshly compressed material web 108. As the laminated material web 108 progresses along the lamination point 110 towards roller 310, the temperature control units 111 may gradually lower the temperature so that the carrier 308, and consequently the laminated material web 108, also gradually cool down in a uniform and controlled manner.

When the carrier 308 and the laminated material web 108 reach roller 310, they are separated. Roller 310 is configured to rotate in a clockwise direction such that the carrier 308 bends downward towards the reuse roll 313, while the material web 108 peels away from the carrier 308 and continues downstream for further processing. The reuse roll 313, configured to rotate counterclockwise, receives the carrier 308 at its underside, which enables the carrier 308 to be rewound onto the reuse roll 313. In embodiments, the carrier 308 that is rewound may be reused or disposed, depending on its condition after use.

In this embodiment, the graphite web 108 is directly transited downstream for further processing. For example, rollers 330 and 331 may be configured to emboss the graphite web 108 or cut the graphite web 108 or a combination of both. Rollers 332 and 333 may be configured to be part of a conveyor system that is configured to transport the graphite web 108 downstream. In other embodiments, the material web 108 may be removed at roller 310 for storage or separate processing.

In another embodiment, a second conveyor, similar to conveyor 209 in Figure 5, may be positioned above the temperature-controlled conveyor 309. The second conveyor may be looped around a pair of rollers located above the temperature-controlled conveyor 309 and configured to move in synchronization with the temperature-controlled conveyor 309. As the material web 108 is laminated onto the carrier 308, the material web 108 is simultaneously supported from above by the second conveyor. This configuration provides structural support to the material web 108 from both above and below its surface, as well as allows for further compression during the cooling process if required.

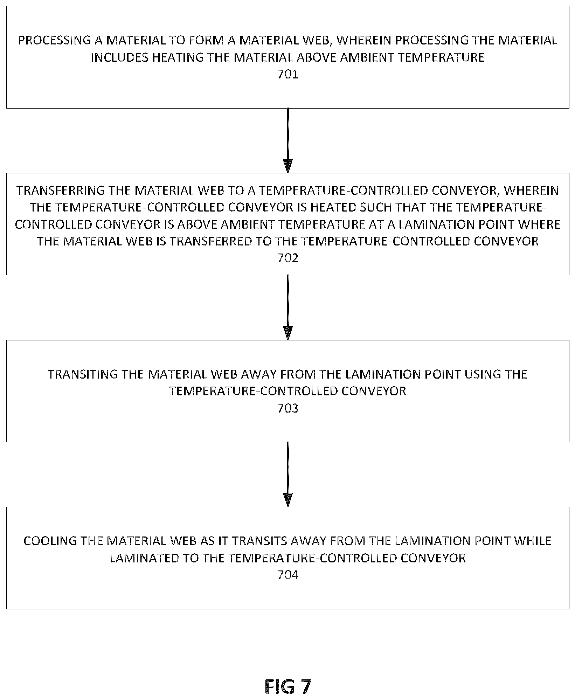

Figure 7 illustrates an exemplary process flow diagram for producing a material web with controlled cooling and structural support during the cooling. At 701, a material is processed to form a material web, wherein processing the material includes heating the material above ambient temperature. At 702, the material web is transferred to a temperature-controlled conveyor, wherein the temperature-controlled conveyor is heated such that the temperature-controlled conveyor is above ambient temperature at a lamination point where the material web is transferred to the temperature-controlled conveyor. At 703, the material web is transited away from the lamination point using the temperature-controlled conveyor. At 704, the material web is cooled as it transits away from the lamination point while laminated to the temperature-controlled conveyor.

Various of the above-disclosed and other features and functions, or alternatives thereof, may be combined into many other different systems or applications. Various presently unforeseen or unanticipated alternatives, modifications, variations, or improvements therein may be subsequently made by those skilled in the art, each of which is also intended to be encompassed by the disclosed embodiments.

This disclosure is not limited to the particular systems, devices and methods described, as these may vary. The terminology used in the description is for the purpose of describing the particular versions or embodiments only and is not intended to limit the scope.

## Claims

1. A method for producing a material web comprising:
processing a material to form a material web, wherein processing the material includes heating the material above ambient temperature;
transferring the material web to a temperature-controlled conveyor, wherein the temperature-controlled conveyor is heated such that the temperature-controlled conveyor is above ambient temperature at a lamination point where the material web is transferred to the temperature-controlled conveyor;
transiting the material web away from the lamination point using the temperature-controlled conveyor;
wherein the material web is cooled as it transits away from the lamination point while laminated to the temperature-controlled conveyor.

2. The method of claim 1, wherein
the temperature-controlled conveyor is a conveyor belt.

3. The method of claim 1 or 2, wherein
the temperature-controlled conveyor is an unwound span of substrate material unrolled from a roll.

4. The method of claim 2, wherein
the conveyor belt is made of stainless steel, aluminum, chrome plated metal, brass, copper, or a polymer.

5. The method of one of the preceding claims, wherein
the material is processed by a multi-roll calender, wherein optionally the multi-roll calender comprises a plurality of rollers arranged in a sequence, wherein optionally a rotation speed of each of the plurality of rollers is increased from a first roller to a last roller in the sequence.

6. The method of claim 5, wherein
(i) the temperature-controlled conveyor is adjacent to the last roller in the sequence such that the temperature-controlled conveyor belt receives the material web directly from the last roller and/or
(ii) the temperature-controlled conveyor runs at a same speed as the last roller in the sequence or the temperature-controlled conveyor runs at a slightly faster speed than the last roller in the sequence.

7. The method of one of the preceding claims, further comprising:
transmitting the cooled material web from the conveyor for further processing.

8. The method of one of the preceding claims, wherein
the processing comprises cutting or embossing, and/or
the method further comprises placing a conveyor over the temperature-controlled conveyor, such that the laminated material web is between the conveyor and the temperature-controlled conveyor.

9. The method of one of the preceding claims, wherein
(a) the conveyor comprises a plurality of rollers mounted thereon configured to further process the material web during the cooling process, and/or
(b) the material comprises a non-continuous carrier, wherein optionally transferring the material web onto the temperature-controlled conveyor comprises laminating the material web onto the non-continuous carrier, wherein optionally the material web along with the non-continuous carrier is transferred to a roller that is configured to separate the non-continuous carrier from the material web.

10. The method of claim 9, further comprising placing a conveyor over the temperature-controlled conveyor, such that the material web and the non-continuous carrier are between the conveyor and the temperature-controlled conveyor.

11. An apparatus for producing a material web comprising:
a multi-roll calender configured to process a material to form a material web, wherein the processing includes heating the material above ambient temperature;
a temperature-controlled conveyor positioned adjacent the multi-roll calender, wherein the temperature-controlled conveyor receives the material web at a lamination point; and
a temperature control unit configured for heating and cooling the temperature-controlled conveyor.

12. The apparatus of claim 11, wherein
(a) the temperature control unit is configured for heating the lamination point above the ambient temperature, or
(b) the temperature control unit is configured for gradually lowering the temperature of the ambient point below the ambient temperature.

13. The apparatus of one of the claims 11 to 12, wherein
the temperature control unit is configured for heating a last roll of the multi-roll calender, wherein the last roll is adjacent the conveyor.

14. The apparatus of one of the claims 11 to 13, wherein
the temperature control unit comprises an infrared heating system directed at the conveyor surface.

15. The apparatus of one of the claims 11 to 14, wherein
the temperature control unit is an inductive heater.
